(19) Europäisches Patentamt
European Patent Office
Office européen des brevets

(11) Veröffentlichungsnummer: **0 385 226 A2**

(12) **EUROPÄISCHE PATENTANMELDUNG**

(21) Anmeldenummer: **90103190.6**

(22) Anmeldetag: **20.02.90**

(51) Int. Cl.$^5$: **C08L 83/10, C08L 69/00, C08L 75/04, C08L 51/00**

(30) Priorität: **03.03.89 DE 3906918**

(43) Veröffentlichungstag der Anmeldung:
**05.09.90 Patentblatt 90/36**

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Grigo, Ulrich, Dr.**
**Michelsheide 9**
**D-4152 Kempen 3(DE)**
Erfinder: **Nouvertné, Werner, Dr.**
**Burgstrasse 17b**
**D-4150 Krefeld 1(DE)**
Erfinder: **Tacke, Peter, Dr.**
**Brandenburger Strasse 12**
**D-4150 Krefeld 1(DE)**
Erfinder: **Bushong, William, Dr.**
**c/o Mobay Corporation Plastics/Bldg.8**
**Pittsburgh PA 15205(US)**
Erfinder: **Quiring, Bernd, Dr.**
**Albrecht-Hausdrofer-Strasse 2**
**D-5090 Leverkusen 1(DE)**

(54) **Mischungen aus Polydiorgano-siloxan-Polycarbonat-Block-copolymeren mit thermoplastischen Polyurethanen und gegebenenfalls Pfropfpolymeren.**

(57) Gegenstand der vorliegenden Erfindung sind Mischungen aus Polydiorganosiloxanen-Polycarbonat-Blockcopolymeren mit thermoplastischen Polyurethanen und gegebenenfalls Pfropfpolymeren sowie gegebenenfalls geeigneten Hilfsstoffen, Verstärkungsstoffen und/oder Pigmenten sowie ein Verfahren zur Herstellung dieser Mischungen.

EP 0 385 226 A2

Xerox Copy Centre

# Mischungen aus Polydiorganosiloxan-Polycarbonat-Blockcopolymeren mit thermoplastischen Polyurethanen und gegebenenfalls Pfropfpolymeren

Gegenstand der vorliegenden Erfindung sind Mischungen enthaltend

A) 40 bis 88 Gew.-%, vorzugsweise 50 bis 86 Gew.-% an Polydiorganosiloxan-Polycarbonat-Blockcopolymeren,

B) 12 bis 35 Gew.-%, vorzugsweise 14 bis 25 Gew.-% an thermoplastischen Polyurethanen und

C) 0 bis 25 Gew.-%, vorzugsweise 7 bis 25 Gew.-% an Pfropfcopolymeren erhältlich durch Pfropfung von 5 bis 35 Gew.-Teilen von Acrylverbindungen, gegebenenfalls im Gemisch mit Styrolen auf 95 bis 65 Gew-Teile eines Kautschuks ausgewählt aus vernetzten Dienkautschuken und wenigstens teilweise vernetzten Alkylacrylatkautschuken.

Aus dem US-Patent 3 431 224 sind Mischungen von Polycarbonaten mit anderen Harzen in Mengen von 0,25 % bis 50 % bekannt. Als andere Harze sind auch Polyurethanelastomere geeignet. Die Polycarbonate erhalten durch den Harzzusatz eine verbesserte Oberfläche mit verbesserter Spannungsrißbeständigkeit und mit verbesserter Kratzfestigkeit. Als Polycarbonate sind keine aus Si-haltigen Diphenolen darin beschrieben.

US-Patent 2 999 835 beschreibt Mischungen von Polycarbonaten mit Organopolysiloxanen.

Mischungen aus Polycarbonat und 0,25 bis 50% eines Polyurethans sowie 0,01 bis 2,0 % eines Pfropfpolymeren (Alkenylcyanid und Vinylaromaten auf Polybutadien) sind gemäß DE-OS 2 304 214 bzw. US-Patent 3 813 358 bekannt. Die Abmischungen haben verbesserte Oberflächeneigenschaften. Wiederum sind keine Polycarbonate aus Si-haltigen Diphenolen darin beschrieben.

Aus dem US-Patent 4 034 016 sind Mischungen aus Polybutylenterephthalaten, Polyurethanen und Polycarbonaten bekannt.

US-PS 4 169 479 beschreibt thermolastische Polyurethanelastomermischungen aus 40 bis 100 % eines thermoplastischen Polyurethans, 0 bis 60 % eines thermoplastischen Polymeren (Polycarbonat) und 0,4 bis 10% eines Acrylpolymeren. Die Produkte zeichnen sich durch eine gute Homogenität der Mischung und die Formteile durch einen verbesserten Glanz aus. Als Acrylpolymere sind keine Pfropfpolymeren subsummiert. Als Polycarbonate sind keine aus Si-haltigen Diphenlen beschrieben.

Aus dem US-Patent 4 350 799 bzw. dem EP-A 0 074 594 sind Mischungen von thermoplastischen Polyurethanen, thermoplastischen Polyphosphonaten und thermoplastischen Polycarbonaten bekannt, welche eine verbesserte Flammwiderigkeit besitzen.

Aus der EP-OS 0 104 695 sind Mischungen aus einem oder mehreren Pfropfpolymerisaten, gegebenenfalls einem oder mehreren Copolymerisaten, einem oder mehreren Polycarbonaten und einem oder mehreren Polyurethanen, bekannt. Derartigen Mischungen werden eine gute Benzinbeständigkeit, gute Verarbeitungseigenschaften und ein gutes Fließverhalten zugeschrieben.

Als Polyurethane kommen elastische Polyurethane in Betracht (Seite 7, Absatz 4 von EP 0 104 695). Als Kautschukgrundlage für die Herstellung der Pfropfpolymerisate sind Polybutadien, Butadien-Styrol, Butadien-Acrylnitril oder Butadien-Acrylat-Kautschuke besonders erwähnt. (Seite 3, Zeilen 22/24 von EP 0 104 695).

Die Pfropfmonomeren sind Mischungen von 20 bis 40 Gew.-% Acrylverbindungen mit 80 bis 60 Gew.-% Vinylaromaten und gegebenenfalls 0 bis 20 Gew.-% andere ungesättigte Verbindungen geeignet.

Als Acrylverbindungen sind u.a. Akylacrylate und Alkylmethacrylate oder deren Mischungen geeignet. (Seite 2. letzter Absatz von EP 0 104 695).

Die Menge an Pfropfpolymerisaten beträgt 5-90 %, die Menge an Polycarbonaten beträgt ebenfalls 5-90 % und die Menge an Polyurethanen beträgt 0,5-25 %.

Als Polycarbonate sind keine aus Si-haltigen Diphenolen beschrieben; auch in den auf Seite 4, Zeilen 10 bis 12 der EP-A 0 104 695 zitierten Literaturstellen sind keine Polycarbonaten aus Si-haltigen Diphenolen beschrieben.

Aus der EP-A 0 125 739 sind Abmischungen von 50 bis 95 Gew-Teilen an Polycarbonaten oder Polyestern, 2,5 bis 15 Gew-Teilen an thermoplastischen Polyurethanen und 2,5 bid 35 Gew-Teilen von Ethylen-Propylen-Dienkautschuken, die mit ethylenisch ungesättigten Verbindungen behandelt worden sind, welche Carboxyl-Gruppen enthalten oder bilden können.

Als Polycarbonate sind keine aus Si-haltigen Diphenolen erwähnt; auch in den auf Seite 3, Zeilen 6/7 der EP-OS 0 125 739 zitierten Literaturstellen sind ebenfalls keine Polycarbonate aus Si-haltigen Diphenolen beschrieben

Die DE-OS 3 521 407 (Le A 23 628) beschreibt thermoplastische Formmassen mit verbesserten Fließnahtfestigkeit.

Die Formmassen enthalten thermoplastische Polycarbonate, zwei verschiedenen Pfropfpolymerisate und ein Copolymerisat und gegebenefalls Additive wie Stabilisatoren, Pigmente, Fließmittel, Entformungsmittel, Flammschutzmittel und/oder Antistatika. Als Pfropfmonomere sind Methylmethacrylat erwähnt, als zu pfropfende Kautschuke eignet sich beispielsweise Polybutadien. Als Fließhilfsmittel wird ein thermoplastisches Polyurethan eingesetzt, und zwar in Mengen von 2 Gew.-Teilen pro 100 Gew.-Teile der Formmasse aus Polycarbonat, Pfropfpolymerisaten und Copolymerisat. Als Polycarbonate sind auch solche aus Si-haltigen Diphenolen in involviert.

Aus der DE-OS 3 521 408 (Le A 23 887) sind Mischungen aus Polysiloxan-Polycarbonat-Blockcopolymeren (A) (10-90 Gew.-Teile) und gegebenenfalls Copolymerisaten (C) 0-80 Gew.-Teile) bekannt, die 0,5 Gew.-Teile bis 10 Gew.-Teile, bezogen auf 100 Gew.-Teile der Formmasse aus (A) + (B) und gegebenenfalls (C), eines speziellen Polyurethans enthalten. Die resultierenden Produkte haben gute Fließfähigkeit bei gleichzeitiger Beibehaltung der guten mechanischen Eigenschaften derartiger Mischungen, insbesondere bei guter Thermostabilität.

Bekannt ist außerdem, daß durch Einkondensation von Siloxansegmenten in die thermoplastischen, aromatischen Polycarbonate deren Tieftemperaturzähigkeit erheblich verbessert werden kann. (Siehe beispielsweise DE-OS 3 334 782 (Le A 22 594) und B.M. Beech, R.P. Kambom und A.R. Schultz, J. Polymer Sci, Polymer Lett. Ed. 12, 247-252 (1974)).

In Anbetracht dieses Standes der Technik war es dennoch nicht naheliegend, daß die erfindungsgemäßen Abmischungen gute Tieftemperaturzähigkeit mit guter Wärmeformbeständigkeit und mit guter Treibstoffestigkeit erhalten werden, da bis zu 10 Gew.% an Polyurethanzusatz noch keine Verbesserung in der Treibstoffestigkeit bewirken und da durch die Wahl der Si-haltigen Polycarbonate eine optimale Verträglichkeit der Komponenten der erfindungsgemäßen Mischung und sonst gute Oberflächen der aus den erfindungsgemäßen Mischungen erhältlichen Formteile erhalten werden.

Erfindungsgemäß einsetzbare Polydiorganosilixan-Polycarbonat-Blockcopolymere gemäß Komponente A) sind solche mit mittleren Molekulargewicht $\overline{M}_w$ (Gewichtsmittel) von 10.000 bis 200.000, vorzugsweise von 20.000 bis 80.000 und mit einem Gehalt an aromatischen Carbonatstruktureinheiten zwischen 98 Gew.-% und 70 Gew.-%, vorzugsweise zwischen 96 Gew.-% und 80 Gew.-% und mit einem Gehalt an Diorganosiloxy-Einheiten zwischen 2 Gew.-% und 30 Gew.-%, vorzugsweise zwischen 4 Gew.-% und 20 Gew.-%, wobei die Blockcopolymeren ausgehend von ω-Bishydroxyaryloxypolydiorganosiloxanen mit einem Polymerisationsgrad von 5 bis 130, vorzugsweise von 10 bis 120 und insbesondere von 10 bis 100 erhältlich sind.

Die Komponente A) kann auch eine Mischung sein aus Polydiorgano-Polycarbonat-Blockcopolymeren mit anderen, siloxanfreien, aromatischen, thermoplastischen Polycarbonaten, wobei der Gesamtgehalt an Diorganosiloxy-Einheiten in diesen Mischungen wieder zwischen 2 Gew.-% und 30 Gew.-%, vorzugsweise zwischen 4 Gew.-% und 20 Gew.-% liegt.

Die Angaben über die Molekulargewichte der siloxanhaltigen Polycarbonate gilt auch für die siloxanfreien Polycarbonate.

Die Molekulargewichte der siloxanfreien und siloxanhaltigen Polycarbonate werden in bekannter Weise ermittelt.

Die erfindungsgemäß verwendbaren Polydiorganosiloxan-Polycarbonat-Blockcopolymeren gemäß Komponente A) sind solche auf Basis der Diphenole der Formel (I) und der Formel (I a)

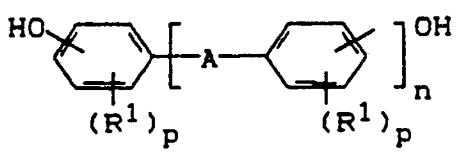

(I)

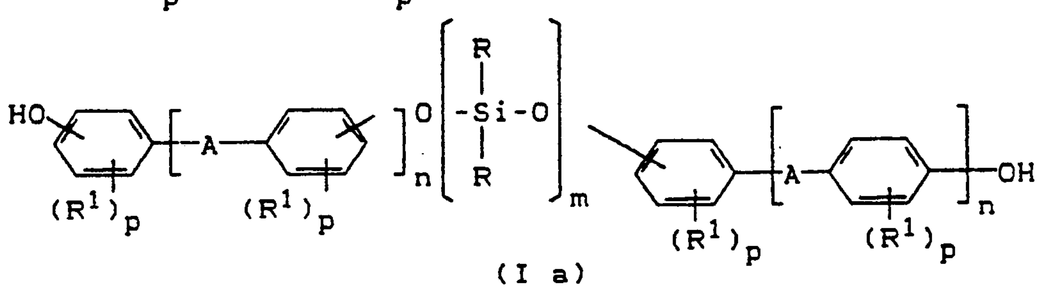

(I a)

worin

die $R^1$ gleich oder verschieden sind und Cl, Br oder$CH_3$ sind, p Null, 1 oder 2 ist, A eine Einfachbindung $C_1$-$C_5$-Alkylen, ein $C_2$-$C_5$-Alkyliden, ein $C_5$-$C_6$-Cycloalkyliden, -S- oder -$SO_2$-, n = 1 oder Null ist, die R gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$ und m eine ganze Zahl zwischen 5 und 130, vorzugsweise zwischen 10 und 120 ist, und wobei der Gewichtsanteil an Diphenolen der Formel (I a) in den Copolycarbonaten jeweils so bemessen ist, daß der Gehalt an Diorganosiloxy-Einheiten, worin R die

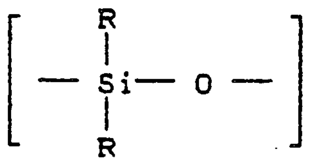

Bedeutung wie in Formel (Ia) hat, im Copolycarbonat, das für Komponente A eingesetzt wird, zwischen 2 und 30 Gew.-%, vorzugsweise zwischen 4 und 20 Gew.-% beträgt. Die komplementäre Menge an aromatischen Carbonatstruktureinheiten

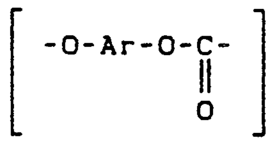

worin -O-Ar-O ein Diphenolat ist, beträgt dementsprechend 98 bis 70 Gew-%, vorzugsweise 96 bis 80 Gew.-%.

Andere, siloxanfreie thermoplastische, aromatische Polycarbonate sind vorzugsweise solche, die als Diphenole nur solche der Formel (I) eingebaut enthalten.

In den Fällen, in denen die Komponente (A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 30 Gew.-% enthalten, sofern durch die Abmischung mit den siloxanfreien Polycarbonaten der Gehalt im Polycarbonatgemisch wiederum zwischen 2 und 30 Gew.-% liegt.

Die Diphenole der Formel (I) sind entweder literaturbekannt oder nach literaturbekannten Verfahren herstellbar.

Polydiorganosiloxane mit Hydroxyaryloxy-Endgruppen gemäß Formel (I a) sind ebenfalls bekannt (siehe z.B. US-Patent 3 419 634) bzw. nach literaturbekannten Verfahren herstellbar.

Die Herstellung der erfindungsgemäß geeigneten Polydiorganosiloxan-Polycarbonat-Blockcopolymeren gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. [Bezüglich polydiorganosiloxanhaltigen Polycarbonaten, siehe z. B. DE-OS 3 334 782 (Le A 22 594)].

Geeignete Kettenabbrecher sind z B. Phenol oder p-tert.-Butylphenol, aber auch langkettige Alkylphenole wie 4-(1,3-Tetramethyl-butyl)phenol gemäß DE-OS 2 842 005 (Le A 19 006) oder Monoalkylphenole oder Dialkylphenole mit insgesamt 8 bis 20 C-Atomen in den Alkylsubstituenten gemäß deutscher Patentanmeldung P 3 506 472.2 (Le A 23 654), wie z B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol.-%, bezogen auf die Summe der jeweils eingesetzten Diphenole (II) und (II a).

Siloxanfreie thermoplastische, aromatische Polycarbonate sind ebenfalls literaturbekannt.

Geeignete Diphenole für die Herstellung der Polycarbonate sind beispielsweise Hydrochinon, Resorcin, Dihydroxydiphenyle, Bis-(hydroxyphenyl)-alkane, Bis-(hydroxyphenyl)-cycloalkane, Bis-(Hydroxyphenyl)-sulfide, Bis-(hydroxyphenyl)-ether, Bis-(hydroxyphenyl)-ketone, Bis(-hydroxyphenyl)-sulfoxide, Bis-(hydroxyphenyl)-sulfone und $\alpha,\alpha'$-Bis-(hydroxyphenyl)-diisopropylbenzole sowie deren kernalkylierte und kernhalogenierte Verbindungen. Diese und weitere Diphenole sind z B. in den US-Patentschriften 3 028 365, 3 272 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der französischen

Patentschrift 1 561 518 und in der Monographie von H. Schnell, "Chemistry and Physics of Polycarbonates", Interscience Publishers, New York, beschrieben.

Bevorzugte Diphenole sind z B.

4,4'-Dihydroxydiphenyl, 2,4-Bis-(4-hydroxyphenyl)-2-methylbutan, α,α'-Bis-(4-hydroxyphenyl)-p-diisopropylbenzol, 2,2-Bis-(3-methyl-4-hydroxyphenyl)-propan, 2,2-Bis(3-chlor-4-hydroxyphenyl)-propan, Bis-(3,5-dimethyl-4-hydroxyphenyl-methan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan und α,α'-Bis-(3,5-dimethyl-4-hydroxyphenyl)-p-diisopropylbenzol.

Besonders bevorzugte Diphenole sind z. B.

2,2-Bis-(4-hydroxyphenyl)-propan (Bisphenol A), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (I a) sind solche, in denen R Methyl, Ethyl, Propyl, n-Butyl, tert.-Butyl und Phenyl ist.

Bevorzugte Diphenole der Formel (Ia) sind die der Formel (I b)

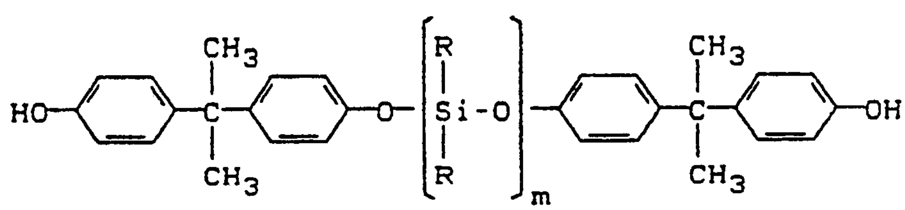

(I b)

worin die R's gleich sind und die vorstehend genannte Bedeutung haben, also Methyl etc. und Phenyl bedeuten und m wiederum um eine ganze Zahl zwischen 5 und 130, vorzugsweise zwischen 10 und 120 ist.

Die erfindungsgemäß geeigneten siloxanhaltigen und siloxanfreien Polycarbonate gemäß Komponente A) können in bekannter Weise verzweigt sein, und zwar vorzugsweise durch den Einbau von 0,05 bis 2,0 Mol.-%, bezogen auf die Summe der eingesetzten Diphenole, an drei- oder mehr als dreifunktionellen Verbindungen, z. B. solchen mit drei oder mehr als drei phenolischen OH-Gruppen (siehe beispielsweise DE-OS 33 47 071 (Le A 22 802)).

Bevorzugte Polydiorganosiloxan-Polycarbonat-Blockcopolymere sind Copolycarbonate der Diphenole der Formel (I) mit Diphenolen der Formel (I a).

Die erfindungsgemäß geeigneten Polydiorganosiloxan-Polycarbonate-Blockpolymeren lassen sich auch durch ihre relativen Lösungsviskositäten von 1,16 bis 1,5 charakterisieren, wobei $\eta_{rel}$ in $CH_2Cl_2$ bei 25°C und einer Konzentration von 0,5 g pro 100 ml Lösung gemessen ist.

Thermoplastische Polyurethane gemäß Komponente B) vorliegender Erfindung sind Reaktionsprodukte aus Diisocyanaten, ganz oder überwiegend aliphatischen Oligo-und/oder Polyestern und/oder -ethern sowie einem oder mehreren Kettenverlängerern. Diese thermoplastischen Polyurethane sind im wesentlichen lienar und besitzen thermoplastische Verarbeitungscharakteristiken.

Die thermoplastischen Polyurethane sind entweder bekannt oder können nach bekannten Verfahren (siehe beispielsweise US-PS 3 214 411, J.H. Saunders und K.G. Frisch, "Polyurethanes, Chemistry and Technology", Vol II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Diemthyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw. eingesetzt werden.

Die resultierenden Hydroxyl-oligo-oder -polyester haben ein Molekulargewicht von wenigstens 600, eine

Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw- Polyether zur Herstellung der thermoplastischen Polyurethane gemäß Komponente B) sind beispielsweise solche auf Basis von Tetramethylenglykol, Propylenglykol und Ethylenglkyol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane gemäß Komponente B) vorzugsweise 4,4′-Diphenylmethan-diisocyanat verwendet. Es sollte weniger als 5 % 2,4′-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane gemäß Komponente B) verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4′-Diphenylens, das 2,2-Diphenylpropan-4,4′-diisocyanat, das Azobenzol-4,4′-diisocyanat, des Diphenylsulfon-4,4′-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-β-hydroxy-ethylether, 1,3-Phenylen-bis-β-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3′-Dichlorbenzidin, 3,3′-Dinitrobenzidin, Ethanolamin, Aminopropylalkohol, 2,2-Diemthyl-propanolamin, 3-Aminocyclhoexylalkohol und p-Amiobenzylalkohol zu nennen Das Molverhältnis Oligo- bzw- Polyester zu bifunktionellen Kettenverlängerer bewegt sich im Bereich 1:1 bis 1:50, vorzugsweise 1;2 bis 1:30.

Außer difunktionellen Kettenverlängerern können auch in untergeordneten Mengen bis zu etwa 5 Mol-%., bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente B) eingesetzt werden.

Die als Bausteine für die thermoplastischen Polyurethane genannten Diisocyanate, Oligoester, Polyester Polyether. Kettenverlängerer und monofunktionellen Komponenten sind entweder literaturbekannt oder nach literaturbekannten Verfahren erhältlich.

Die bekannte Herstellung der Polyurethan-Komponente B) kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220 °C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B tertiäre Amine, die in dem US-Patent 2 729 618 genannt werden, zur Anwendung kommen.

Die für die Herstellung der Pfropfpolymeren gemäß Komponente C) der vorliegenden Erfindung als Pfropfgrundlage geeigneten, vernetzten Dienkautschuke sind solche aus Polybutadien und/oder Polyisopren, die bis 40 Gew.-% Styrol und/oder Acrylnitril als Comomomere einpolymerisiert enthalten.

Die für die Herstellung der Pfropfcopolymeren gemäß Komponente C) der vorliegenden Erfindung als Pfropfgrundlage geeigneten "wenigstens teilweise vernetzten Alkylacrylatkautschuke sind Alkylarylatpolymere, die durch Polymerisation von Estern" der Acrylsäure und einwertigen Alkoholen mit 1-8 C-Atomen erhalten werden. Die Polymerisate können auch Copolymerisate der Acrylsäureester mit bis zu 40 Gew.-% anderen Vinylmonomeren, wie Styrol, Acrylnitril, Methylmethacrylat, Vinylester und/oder Vinylether sein.

1. Dienkautschuke als Grundlage

Der Gelanteil der als Pfropfgrundlage verwendeten Dienkautschuke soll ≧ 70 Gew.-%, vorzugsweise ≧ 80 Gew.-%, gemessen in Toluol, sein. Die Vernetzung der Dienkautschuke erfolgt hierbei in bekannter Weise.

Der mittlere Teilchendurchmesser $d_{50}$ der vernetzten Dienkautschuke beträgt 0,2 µm bis 0,6 µm, vorzugsweise 0,3 µm bis 0,5 µm und insbesondere 0,4 µm.

Durch Emulsionspolymerisation hergestellte Butadienkautschuke sind besonders bevorzugt.

2. Alkylacrylatkautschuke als Grundlage

Die Alkylacrylatkautschuke sind mindestens teilweise vernetzt, z.B durch Einpolymerisieren polyfunktioneller, vernetzend wirkender, copolymerisierbarer oelfinisch ungesättigter Comonomerer. Zur Vernetzung können Monomere mit mehr als einer polymerisierbaren Doppelbindung copolymerisiert werden. Bevorzugte Beispiele für vernetztende Monomere sind Ester ungesättigter Monocarbonsäuren mit 3 - 8 C-Atomen und ungesättigter einwertiger Alhokole mit 3 - 12 C-Atomen oder gesättigter Polyole mit 2 -4 OH-Gruppen und 2 -20 C-Atomen, wie z.B. Ethylenglykoldimethacrylat. Allylmethacrylat; mehrfach ungesättigte heterocyclische Verbindungen, wie z.B. Trivinyl- und Triallylcyanurat und -isocyanurat, Trivinylbenzole; aber auch Triallyphosphat und Diallylphthalat.

Bevorzugte vernetzende Monomere sind Allylmethacrylat, Ethylenglykolmethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Kautschuk-Pfropfgrundlage.

Bei cyclischen vernetzenden Monomeren mit mindestens drei ethylenisch ungesättigten Gruppen ist es vorteilhaft, nicht mehr als 1 Gew.-%, bezogen auf die Kautschuk-Pfropfgrundlage, zu verwenden.

Alkylacrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und aufpolymerisiertes Poly(meth) acrylat als Hülle enthalten.

Der Anteil des Polydienkerns in solchen mehrschaligen Kautschuk-Pfropfgrundlagen kann 0,1 bis 80, bevorzugt 10 bis 50 Gew.-%, betragen. Schale(n) und Kern können unabhängig voneinander teilvernetzt oder hochvernetzt sein.

Die Alkylacrylatkautschuke 2 liegen als Teilchen eines mittleren Durchmessers $d_{50}$ im Bereich von 0,05 bis 1 µm, vorzugsweise von 0,1 bis 0,6 µm und insbesondere von 0,2 bis 0,5 µm, vor und besitzen Gelgehalte ≧ 70 Gew.-%, vorzugsweise ≧ 80 Gew.-% (gemessen in Dimethylformamid).

Der mittlere Teilchendurchmesser d der Dienkautschuke 1 als auch der Alkylacrylatkautschuke 2 kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster,

Angew. Makromolekulare Chemie 14, (1970), 111-129) in bekannter Weise bestimmt werden.

Dabei bleibt zu erwähnen, daß die Kautschukteilchen in den Formmassen in gepfropftem Zustand vorliegen; man könnte somit vermuten, daß durch die Pfropfung die Kautschukteilchengröße verändert wurde, verglichen mit den in den Kautschuklatices vorliegenden Kautschukteilchen Es hat sich allerdings gezeigt, daß die Pfropfung sowie die Pfropfhüllenmenge gemäß den hier beschriebenen Kennzeichen die Kautschukteilchengröße praktisch kaum beeinflußt, so daß an Formmassen ermittelte Verteilungskurven mit an Latex ermittelten Verteilungskurven verglichen werden können.

Für die Ermittlung der Teilchendurchmesser ergibt sich dabei folgendes:

Werden die Teilchenverteilungen mittels Elektronenmikroskopie und anschließende Teilchenauszählung ermittelt, so fallen dabei Zahlenmittel (und nicht Gewichtsmittel) an. So ermittelte Zahlenmittel müssen dann allerdings in Gewichtsmittel umgerechnet werden, damit sie mit den hier angegebenen Werten $d_{10}$, $d_{50}$, $d_{90}$ vergleichbar sind. Diese Umrechnung gelingt z.B. nach W. Scholtan und H. Lange und liefert für beide Methoden gut übereinstimmende Werte. Weiterhin sei auf DIN 53 206 hingewiesen, wo Umrechnungen von Teilchengrößenverteilungen definiert sind.

Bei den in dieser Anmeldung angegebenen mittleren Teilchengrößen handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen gleichen oder kleineren Duchmesser haben als der Durchmesser, der dem $d_{50}$-Wert entspricht. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Die $d_{10}$-bzw. $d_{90}$-Werte der integralen Massenverteilung sind dabei entsprechend dem $d_{50}$-Wert definiert mit dem Unterschied, daß sie auf 10 und 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Die Differenz $d_{10}$ (b) - $d_{90}$ (a) ist dann ein Maß für die Überlappung der Kurven: Ist die Differenz positiv, so liegt keine oder nur eine geringfügige Kurvenverlappung vor; ist die Differenz negativ, so ist eine Kurvenüberlappung vorhanden, deren Ausmaß durch die Größe des negativen Wertes beschrieben wird.

Wie schon gesagt, kann man auch die Zahlenmittelverteilung der Kautschukteilchen ermitteln und anschließend in Gewichtsmittel umrechnen. Die mikroskopische Auszählmethode gemäß G. Kämpf et al. ist um so genauer, je mehr Teilchen ausgezählt werden; normalerweise sollten wenigstens $10^4$ Teilchen vermessen werden, die dann nach statistischer Auswertung eine Teilchengrößenzahlenmittel-Verteilungskurve liefern. Man kann dabei beispielsweise die Teilchengrößenklassen gerade so wählen, daß 90 % der Teilchen auf nicht weniger, aber auch nicht mehr als 20 Klassen verteilt sind.

Wie bereits erwähnt, wird der Gelgehalt der Dienkautschuke bei 25 °C in Toluol, der Gelgehalt der Alkylacrylatkautschuke bei 25 °C in Dimethylformamid bestimmt (M. Hoffmann, H. Krömer, R. Kuhn, Polymeranalytik I und II, Georg Thieme Verlag Stuttgart 1977).

Erfindungsgemäß sowohl für die Dienkautschuke 1 als auch für die Alkylacrylatkautschuke 2 geeignete Pfropfmonomeren sind Acrylverbindungen, die gegebenenfalls im Gemisch mit Styrolen eingesetzt werden.

Geeignete Acrylverbindungen sind Acrylnitril, Methacrylnitril, aliphatische Ester der Acrylsäure und der Methacrylsäure mit insgesamt bis 22 C-Atomen Geeignete Styrole sind $\alpha$-Methylstyrol und p-Methylstyrol.

Bevorzugte Pfropfmonomere sind Ester der Acrylsäure bzw. Methacrylsäure. Von der Estern der Acrylsäure bzw. Methacrylsäure sind der Methyl-, der Ethyl-, der n-Butyl-, der tert.-Butyl-, der Octyl- und der Ethylhexylester oder deren Mischungen besonders bevorzugt.

Bevorzugtes Styrol ist Styrol selbst.

Das Mischungsverhältnis von Acrylverbindungen zu Styrolen liegt im üblichen Bereich.

Die Pfropfcopolymeren gemäß Komponente C) können nach allen bekannten Polymerisationsverfahren (Emulsions-, Lösungs-, Masse-, Suspensions-, Fällungspolymerisation) sowie nach Kombinationen aus

diesen Verfahren hergestellt werden. Solche Verfahren sind z.B. in den DAS 1 247 665 und 1 269 360 beschrieben.

Bevorzugtes Polymerisationsverfahren für die erfindungsgemäßen Pfropfpolymeren ist die Emulsionspolymerisation.

Zur Herstellung der Pfropfprodukte werden die aufzupfropfenden Monomeren in Gegenwart der vorgebildeten Pfropfgrundlage polymerisiert. Es bildet sich dabei neben dem eigentlichen Pfropfpolymerisat auch freies Homopolymerisat. Unter Pfropfpolymerisation wird die Summe der eigentlichen Pfropfcopolymerisate und der freien Polymerisate verstanden. Die Menge des aufgepfropften Monomeren und sein Molekurlargewicht kann in weiten Grenzen durch Variation der Polymerisationsbedingungen beeinflußt werden. Hierzu gehören vor allem; Art des Polymerisationsverfahrens, Temperatur, Katalysatorsystem, Molekurlargewichtsregler, Rührbedingungen und Art der Monomerdosierung. Erfindungsgemäß sollte die Pfropfausbeute G > 0,15, vorzugsweise G > 0,40 betragen. Die Pfropfausbeute G bezeichnet das Mengenverhältnis von aufgepfropften Monomer zur Gesamtmenge der Monomeren in der Pfropfauflage und ist dimensionslos.

Die Pfropfcopolymeren gemäß Komponente C) sind somit genau genommen in den allermeisten Fällen Gemische aus chemisch gepfropften Monomeren auf die Kautschukgrundlagen und den aus dem Monomeren ohne Kautschuk erhältlichen Polymerisaten.

Statt nur einer Pfropfgrundlage können auch Abmischungen verschiedener Pfropfgrundlagen zur Herstellung der Pfropfpolymerisate eingesetzt werden. Weiterhin können statt nur eines Pfropfpolymers auch Abmischungen mehrerer erfindungsgemäßer Pfropfpolymerisate mit unterschiedlichem Aufbau als Komponente C) eingesetzt werden.

Bevorzugte Pfropfpolymere gemäß Komponente C) auf Basis der Dienkautschuke 1 sind solche aus

1 a) 65 bis 95 Gew.-Teilen, insbesondere 70 bis 90 Gew.-Teilen eines Dienkautschuks aus Butadien und/oder Isopren, der zumindest aus 90 Gew.-% Butadien-und/oder Isopren-Einheiten aufgebaut ist, als Pfropfgrundlage und

1 b) 5 bis 35 Gew-Teilen, insbesondere 10 bis 30 Gew.-teilen von mindestens einem $C_1$-$C_5$-Alkylester der (Meth)Acrylsäure als aufzupfropfenden Monomeren, wobei der Gelanteil von 1 a) > 70 Gew.-%, vorzugsweise > 80 Gew.-%, die Pfropfausbeute von 1 b) G ≧ 0,15, vorzugsweise ≧ 0,40 und der mittlere Teilchendurchmesser der Pfropfpolymeren 0,2 bis 0,6 µm, vorzugsweise 0,3 bis 0,5 µm und insbesondere 0,4 µm sind.

Bevorzugte Pfropfpolymere gemäß Komponente C) auf Basis der Alkylacrylatkautschuke 2 sind solche aus

2 a) 65 bis 95 Gew.-Teilen, insbesondere 70 bis 90 Gew.-Teilen eines vernetzten $C_1$-$C_5$ Alkylesters der Acrylsäure als Pfropfgrundlage und

2 b) 5 bis 35 Gew.-Teilen, insbesondere 10 bis 30 Gew.-teilen Pfropfmonomeren, ausgewählt aus Methacrylsäurealkylester mit maximal 9 C-Atomen, Acrylnitril und Styrol, wobei der Gelanteil von 2 a) > 70 Gew.-%, vorzugsweise > 80 Gew.-%, die Pfropfausbeute von 2 b) ≧ 0,15, vorzugsweise ≧ 0,4 und der mittlere Teilchendurchmesser der Pfropfpolymeren 0,05 bis 1 µm, vorzugsweise 0,1 bis 0,6 µm, und insbesondere 0,2 bis 0,5 µm sind.

Die Herstellung der erfindungsgemäßen Formmassen aus den Komponenten A, B und gegebenenfalls C kann in üblichen Mischaggregaten erfolgen. Als solche sind besonders Extruder und Kneter zu nennen. Dabei können entweder alle drei Komponenten auf einmal oder, je nach Erfordernis, zunächst zwei der Komponenten für sich vermischt und in einem weiteren Arbeitsgang der dritte zulegiert werden.

Mit diesen Compoundierungen kann die Einarbeitung von für Polycarbonate, Polyurethane und/oder gegebenenfalls Pfropfpolymere geeigneten Hilfs-, Verstärkungsstoffen und/oder Pigmenten in die erfindungsgmeäßen Formmassen verbunden werden, jedoch ist auch die gesonderte Einarbeitung dieser Zusatzstoffe in die Formmassen und/oder die Komponenten A, B und gegebenenfalls C möglich. Als solche Zusatzstoffe sind im einzelnen u.a. Glas-, Kohlenstoffasern, Fasern von organischen und anorganischen Polymeren, Calciumcarbonat, Talkum, Kieselgel, Quarzmehl, Fließmittel, Entformungsmittel, Stabilisatoren, Ruß und $TiO_2$ zu nennen.

Gegenstand der vorliegenden Erfindung sind somit auch die erfindungsgemäßen Mischungen aus den Komponenten A), B) und gegebenenfalls C), wobei sie mindestens einen Zusatz ausgewählt aus Hilfsstoffen, Verstärkungsstoffen und Pigmenten enthalten.

Ein weiterer Gegenstand der Erfindung ist somit die Herstellung von Mischungen enthaltend die Komponenten A), B), und gegebenenfalls die Komponente C) geeignete Hilfsstoffe, Verstärkungsstoffe und/oder Pigmente, das dadurch gekennzeichnet ist, daß man die Komponenten A) B), und gegebenenfalls die Komponente C) und geeignete Hilfsstoffe, Verstärkungsstoffe und/oder Pigmente in üblichen Mischaggregaten mischt und das Gemisch über die Schmelze in bekannter Weise homogenisiert und schließlich extrudiert.

Die Verarbeitung der erfindungsgemäßen Mischungen zu Formteilen, Halbzeug, Folien und kann auf den üblichen Verarbeitungsmaschinen, wie Spritzguß- und Extrusionsanlagen, erfolgen.

Die aus den erfindungsgemäßen Formmassen erhältlichen Formteile werden besonders im Kraftfahrzeugbau eingesetzt.

## Beispiele

Kennzeichnung der verwendeten thermoplastischen Polyurethane (TPU).

### TPU 1

Es besaß einen Schmelzbereich von ca. 200 - 220 °C und ein Zahlenmittel-Molgewicht ( $\overline{M}_n$) von 85.700. Es war aus einem Oligoester aus Butylenglykol-1,4 und Adipinsäure ( $\overline{M}_n$ 2000), 4,4-Diphenylmethan-diisocyanat und Butandiol-1,4 als Kettenverlängerer aufgebaut. Das Verhältnis von NCO- zu OH-Gruppen betrug 1,03.

### TPU 2

Es besaß einen Schmelzbereich von 190 - 210 °C, einen Zahlenmittel-Molekulargewicht ( $\overline{M}_n$) von 79.300. Es war aus Oligobutylenglykol ( $\overline{M}_n$ 1000, OH-Zahl 112), 4,4-Diphenylmethan-diisocyanat sowie Butandiol-1,4 als Kettenverlängerer hergestellt. Das Verhältnis von NCO-zu OH-Gruppen lag bei 1,03.

## Herstellung der verwendeten Pfropfpolymeren

a) Mit Polybutadien als Pfropfgrundlage

In einem druckfesten Rührgefäß wird eine Lösung aus 80 Gew.-Tl, salzfreiem Wasser, 1,5 Gew.-Tl. Natriumsalz der disproportionierten Abietinsäure und 0,3 Gew.-Tl. Kaliumperoxydisulfat vorgelegt. Nach Verdrängen der Luft durch Stickstoff und Einstellung der Innentemperatur auf 55 °C werden 0,35 Gew.-Tl. Dodecylmercaptan und x Gew.-Tl. Butadien zugesetzt und polymerisiert. Mit absinkender Reaktionsgeschwindigkit bei fortschreitender Polymerisation wird die Temperatur langsam auf 68 °C angehoben (x entspricht den Werten von Tabelle 1).

Nach beendeter Polymerisation werden geringe Mengen des nicht umgesetzten Butadiens durch Ausrühren des erhaltenen Latex unter vermindertem Druck entfernt. 175 Gew.-Tl. entsalztes Wasser und 0,3 Gew.-Tl. Kaliumperoxidsulfat werden zugesetzt.

Nach Verdrängen der Luft durch Stickstoff und Erwärmen auf 65 °C werden 2 Gew.-Tl. Emulgator (Na-Salz der disproportionierten Abietinsäure oder Alkylsulfonat), gelöst in 25 Gew.-Tl. Wasser, sowie y Gew.-Tl. der in Tabelle 1 angegebenen Monomeren zugesetzt.

Die Zulaufdauer beträgt ca. 4 Std. Zur Vervollständigung der Reaktion wird nach beendetem Zulauf noch 2 Std. bei 65 °C weitergerührt.

Der so erhaltene Pfropfpolymerlatex wird nach Zusatz von 1 Gew.-Tl. eines phenolischen Antioxidans (2,6-Di-tert.-butyl-p-kresol) mit 2 %iger $MgSO_4$/Essigsäure-Lösung (Mischungsverhältnis 1 : 1 Gew.-Tl.) koaguliert, das Koagulat abgetrennt, salzfrei gewaschen und bei 70 °C im Vakuum getrocknet.

Die Zusammensetzung der Pfropfpolymeren ist in der Tabelle 1 zu entnehmen.

b) Mit Polyacrylat-Kautschuk als Pfropfgrundlage (gemäß EP 134 937).

In einem Reaktor werden vorgelegt:
1030 Gew.-Tl. Wasser und
5 Gew.-Tl. Natriumsalz von $C_{14}$-$C_{16}$-Alkylsulfonsäuren.

Bei 70 °C werden 80 Gew.-Tl. der Lösung 1 (s.u.) eingespeist. Anschließend initiiert man durch Zugabe

von 5 Gew.-Tl. Kaliumperoxydisulfat in 100 Gew.-Tl. Wasser. Danach werden folgende Lösungen dosiert:
Lösung 1: 995 Gew.-Tl. n-Butylacrylat und
5 Gew.-Tl. Triallylcyanurat (80 Gew.-Tl dieser Lösung wurden bereits in die Vorlage gegeben; der Rest der Lösung wird nach Initiierung dosiert!).
Lösung 2: 20 Gew.-Tl. Natriumsalze von $C_{14}$-$C_{18}$-Alkylsulfonsäuren und
700 Gew.-Tl. Wasser.

Nach Zudosierungen der Lösungen 1 und 2 in 5 Std. bei 70° C wird 4 Std. bei 70° C nachpolymerisiert. Es entsteht ein Latex I mit einem Feststoffgehalt von 35 Gew.-%. Die weitere Verarbeitung erfolgt folgendermaßen.
Vorlage 1: 12,4 Gew.-Tl. Latex 1 und
313 Gew.-Tl. Wasser
Vorlage 2: 0,82 Gew.-Tl. Kaliumperoxydisulfat und
20 Gew.-Tl. Wasser
Zulauf 1: 629 Gew.-Tl. n-Butylacrylat und
1 Gew.-Tl. Triallylcyanurat
Zulauf 2: 700 Gew.-Tl. Natriumsalze von $C_{14}$-$C_{16}$-Alkylsulfonsäuren

Bei 65 - 68° C wird Vorlage 1 aufgeheizt; dann speist man 24 Gew.-Tl. von Zulauf 1 ein. Nach Initiierung mit Vorlage 2 wird der Rest von Zulauf 1 und Zulauf 2 innerhalb von 5 Std. zudosiert. Anschließend rührt man 4 Std. nach.

Der hierbei erhaltende Latex II besitzt einen Feststoffgehalt von 37 Gew.-%. Die Latex-Teilchengröße beträgt 0,5 µm. Das Polymerisat besitzt einen Gelgehalt von 93 Gew.-%, gemessen in DMF bei 23° C.

Bei der Pfropfung von Methylmethacrylat auf den erhaltenen Kautschuk wird folgendermaßen verfahren:

| | | |
|---|---|---|
| Vorlage 1: | Latex II | 3286,4 Gew.-Tl. |
| | Kaliumperoxydisulfat | 2 Gew.-Tl. |
| | Wasser | 120 Gew.-Tl. |
| Zulauf 1: | Methylmethacrylat | 304 Gew.-Tl. |
| Zulauf 2: | Natriumsalze von $C_{14}$-$C_{16}$-Alkylsulfonsäuren | 6 Gew.-Tl. |
| | Wasser | 396 Gew.-Tl. |

Bei 65° C wird in die Vorlage 1 Zulauf 1 und Zulauf 2 innerhalb von 4 Std. bei 65° C zudosiert Anschließend läßt man 4 Std. bei 65° C auspolymerisieren (Latex III).

Die Pfropfpolymer-Latices werden wie folgt weiterbehandelt:

| | | |
|---|---|---|
| Vorlage 2: | Wasser | 5525 Gew.-Tl. |
| | $MgSO_4$ x $H_2O$ (Bittersalz) | 107 Gew.-Tl. |
| Zulauf 3: | Latex III | 379,5 Gew.-Tl. |
| Zulauf 4: | Methylmethacrylat | 156 Gew.-Tl. |
| Aktivator: | Kaliumperoxydisulfat | 1,3 Gew.-Tl. |
| | Wasser | 78 Gew.-Tl. |

Unter gutem Rühren wird Vorlage 2 auf 70 - 73° C aufgeheizt. Innerhalb von 1 Std. dosiert man den Zulauf 3 hinzu. Dann fügt man den Zulauf 4 innerhalb von 30 min hinzu und aktiviert anschließend mittels der Aktivatorlösung. Man heizt auf 80° C auf, rührt 2 Std., heizt auf 90° C auf und rührt nochmals 2 Std. Nach anschließender Stabilisierung mit 2 Gew.-Tl. phenolischen Antioxidantien wird über Filtration, Waschung und Trocknung zu einem Pulver aufgearbeitet (Pfropfpolymer F).

Die Zusammensetzung von Pfropfpolymer F ist ebenfalls aus Tabelle 1 ersichtlich:

Tabelle 1

| Zusammensetzung der Pfropfpolymerisate | | | |
|---|---|---|---|
| Typ | Gew.-% X Pfropfgrundlage | Gew.-% Y Pfropfmonomeres | mittlerer Teilchendurchmesser (μm) |
| A | Polybutadien, 80 | 20 MMA / n-BA (9/1) | 0,4 |
| B | Polybutadien, 80 | 20 S/AN (72/28) | 0,4 |
| C | Polybutadien, 80 | 20 MMA | 0,4 |
| D | Polybutadien, 70 | 30 MMA | 0,4 |
| E | Polybutadien, 80 | 20 MA | 0,4 |
| F | Acrylatkautschuk, 70 | 30 MMA | 0,5 |
| n-BA = n-Butylacrylat MMA = Methylmethacrylat<br>S = Styrol MA = Methylacrylat<br>AN = Acrylnitril | | | |

Für die Versuche wurde ein Polycarbonat (PC) auf Basis BPA (2,2-Bis(4-hydroxyphenyl)-propan) der relativen Lösungsviskosität ($\eta$rel) 1,247 verwendet, gemessen an einer Lösung von 0,5 g PC in 100 ml $CH_2Cl_2$-Lösung bei 25 °C.

Folgende Siloxancokondensate (SiCoPC) wurden für Vergleiche hergestellt (analog Beispiel 2a und 3 der DOS 3 334 782; alle Baugruppen sind statistisch verteilt:

| | | $\eta$rel |
|---|---|---|
| SiCoPC 1 = 10 Gew.-% | Siloxan $P_n$ = 10 in PC | 1,268 |
| 1.1 = 10 | = 40 | 1,273 |
| 1.2 = 10 | = 80 | 1,267 |
| 1.3 = 10 | = 90 | 1,259 |
| 1.4 = 10 | = 100 | 1,302 |
| 1.5 = 10 | = 120 | 1,271 |
| 2 = 5 | = 80 | 1,262 |
| 2.1 = 5 | = 90 | 1,258 |
| 2.2 = 5 | = 100 | 1,269 |
| 2.3 = 5 | = 120 | 1,265 |
| 3 = 150 | = 80 | 1,269 |
| 3.1 = 50 | = 90 | 1,271 |
| 3.2 = 50 | = 100 | 1,283 |
| 3.3 = 50 | = 120 | 1,266 |

4 = Granulatgemisch aus 20 Gew.-% SiCoPC 3
und 80 Gew.-% PC
4.1 = Granulatgemisch aus 20 Gew.-% SiCoPC 3.3
und 80 Gew.-% PC

Die Zusammensetzungen der hergestellten Mischungen sowie ihre Eigenschaften gehen aus Tabelle 2 hervor. Die Mischungen wurden in einem Doppelschneckenextruder Typ ZSK 32 der Firma Werner & Pfleiderer compoundiert. Die in der Masse erreichten maximalen Temperaturen sind in Tabelle 2 aufgenommen worden Aus den compoundierten Mischungen wurden nach dem Spritzgießverfahren zur Beurteilung der Oberfläche Prüfstäbe der Abmessungen 127 x 12,7 x 4 mm hergestellt.

Zur Beurteilung der Fließnahtschatten wurden Normkleinstäbe (DIN 53 542) an beiden Enden angespritzt (Zylinderdurchmesser: 30 mm, 900 bar).

Die Bestimmung der Tieftemperatur-Kerbschlagzähigkeit erfolgte nach Izod gemäß 180/4 A.

Die Beurteilung der Prüfstaboberfläche und der Fließnahtschatten erfolgte nach Augenschein durch Vergleich. Es bedeuten in Tabelle 2:

- nicht feststellbar,
+ gerade wahrnehmbar,
+ + erheblich feststellbar
+ + + sehr stark feststellbar

Zur Beurteilung der Treibstofffestigkeit wurden Prüfstäbe (nach Spritzgießverfahren hergestellt) der Abmessungen 80 x 10 x 4 mm dem Schablonentest (W. Kaufmann, Bestimmung der Chemikalienbeständigkeit von Kunststoffen unter mechanischer Spannung, Kunststoffe 65 (1975) S. 155 - 157) unterworfen. Dabei wurden Randfaserdehnungen von 1 % eingestellt. Als Prüfflüssigkeit diente gemäß DIN 51 604, Teil 1, eine Mischung aus:

50 Vol.-% Toluol
30 Vol.-% Iso-Oktan
15 Vol.-% Diisobutylen
5 Vol.-% Ethanol.

Die Prüfung wurde wie folgt durchgeführt:

1. Zyklus

Auf die Biegeschablonen mit aufgebrachter Probe einem mit der Prüfflüssigkeit getränkten Wattebausch gelegt und 15 min einwirken lassen. Probe dann 15 min ablüften lassen.

2. Zyklus

Entspricht dem 1. Zyklus.

Auswertung

Nach Beendigung des 2. Zyklus wird die von der Schabone genommene Probe mit bloßem Auge betrachtet und wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Tabelle 2

| Beispiel | SiCoPC Typ | SiCoPC Gew.-% | TPU Typ | TPU Gew.-% | Pfropfpolym. Typ | Pfropfpolym. Gew.-% | Compoundier Temperatur °C | Aussehen der Oberfl., Flecke | Fließnaht schatten | Kerbschlagzähigkeit n. Izod bei $-50^0 C$ J/m | Treibstoff-festigkeit Stufe |
|---|---|---|---|---|---|---|---|---|---|---|---|
| 1 | 1 | 70 | 1 | 20 | A | 10 | 248 | - | - | 635 | 1 - 2 |
| 2 | 1.1 | 70 | 1 | 20 | A | 10 | 251 | - | - | 642 | 1 - 2 |
| 3 | 1.2 | 70 | 1 | 20 | A | 10 | 255 | + | + | 638 | 1 - 2 |
| 4 | 1.3 | 70 | 1 | 20 | A | 10 | 247 | + | + | 645 | 1 - 2 |
| 5 | 1.4 | 70 | 1 | 20 | A | 10 | 245 | + | ++ | 632 | 1 - 2 |
| * 6 | 1.5 | 70 | 1 | 20 | A | 10 | 246 | ++ | +++ | 625 | 1 - 2 |
| 7 | 1.1 | 75 | 2 | 15 | A | 10 | 252 | - | - | 578 | 2 |
| 8 | 1.1 | 80 | 1 | 20 | - | - | 251 | + | + | 429 | 2 |
| 9 | 1.1 | 70 | 1 | 20 | B | 10 | 249 | - | - | 658 | 1 - 2 |
| 10 | 1.1 | 70 | 1 | 20 | C | 10 | 244 | - | - | 641 | 1 - 2 |
| 11 | 1.1 | 70 | 1 | 20 | D | 10 | 253 | - | - | 637 | 1 - 2 |
| 12 | 1.1 | 70 | 1 | 20 | E | 10 | 257 | - | - | 643 | 2 |
| 13 | 1.1 | 70 | 1 | 20 | F | 10 | 251 | - | - | 652 | 1 - 2 |
| 14 | 2 | 70 | 2 | 20 | B | 10 | 246 | + | + | 541 | 2 |
| 15 | 2.1 | 70 | 2 | 20 | B | 10 | 249 | ++ | ++ | 537 | 2 |
| 16 | 2.2 | 70 | 2 | 20 | B | 10 | 253 | ++ | +++ | 562 | 2 |

Tabelle 2 (F o r t s e t z u n g )

| Beispiel | SiCoPC Typ | SiCoPC Gew.-% | TPU Typ | TPU Gew.-% | Pfropfpolym. Typ | Pfropfpolym. Gew.-% | Compoundier Temperatur °C | Aussehen der Oberfl., Flecke | Fließnahtschatten | Kerbschlagzähigkeit n. Izod bei -50° C J/m | Treibstofffestigkeit Stufe |
|---|---|---|---|---|---|---|---|---|---|---|---|
| * 17 | 2,3 | 70 | 2 | 20 | B | 10 | 251 | +++ | +++ | 548 | 2 |
| 18 | 4 | 70 | 1 | 20 | A | 10 | 251 | + | + | 619 | 2 |
| * 19 | 4,1 | 70 | 1 | 20 | A | 10 | 248 | ++ | +++ | 623 | 2 |
| 20 | 1,1 | 75 | 1 | 25 | - | - | 252 | - | + | 476 | 1 - 2 |
| 21 | 1,1 | 60 | 1 | 20 | A | 20 | 253 | - | - | 617 | 1 - 2 |

Mit Stern gekennzeichnete Versuche dienen dem Vergleich

## Ansprüche

1. Mischungen enthaltend
A) 40 bis 88 Gew.-% an Polydiorganosiloxan-Polycarbonat-Blockcopolymeren,
B) 12 bis 35 Gew.-% an thermoplastischen Polyurethanen und
C) 0 bis 25 Gew.-% an Pfropfcopolymeren erhältlich durch Pfropfung von 5 bis 35 Gew.-Teilen von Acrylverbindungen, gegebenenfalls im Gemisch mit Styrolen auf 95 bis 65 Gew.-Teile eines Kautschuks ausgewählt aus vernetzten Dienkautschuken und wenigstens teilweise vernetzten Alkylacrylatkautschuken, dadurch gekennzeichnet, daß als Komponente A) Blockcopolymere mit einem mittleren Molekulargewicht $\overline{M}_w$ (Gewichtsmittel) von 10.000 bis 200.000 mit einem Gehalt an aromatischen Carbonatstruktureinheiten.

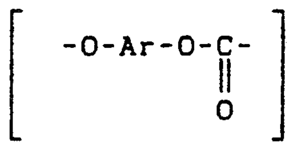
,

worin -O-Ar-O- ein Diphenolat ist, zwischen 98 Gew.-% und 70 Gew.-% und mit einem Gehalt an Diorganosiloxy-Einheiten

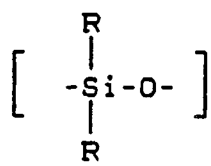
,

worin R gleich oder verschieden sind und ein lineares $C_1$-$C_{20}$-Alkyl, verzweigtes $C_3$-$C_{20}$-Alkyl oder $C_6$-$C_{20}$-Aryl sind, zwischen 2 Gew.-% und 30 Gew.-%, eingesetzt werden, wobei die Blockcopolymeren ausgehend von ω-Bishydroxyaryloxypolydiorganosiloxanen mit einem Polymerisationagrad von 5 bis 130 erhältlich sind.

2. Mischungen gemäß Anspruch 1, dadurch gekennzeichnet, daß die Blockcopolymeren ausgehend von α,w-Bishydroxyaryloxypolydiorganosiloxanen mit einem Polymerisationsgrad von 10 bis 120 erhältlich sind.

3. Mischungen gemäß Anspruch 1, dadurch gekenzeichnet, daß die Blockcopolymeren ein $\overline{M}_w$ von 20.000 bis 80.000 haben.

4. Mischungen gemäß Anspruch 1, dadurch gekennzeichnet, daß die Blockcopolymeren der Komponente A) einen Gehalt an Carbonatstruktureinheiten zwischen 96 Gew.-% und 80 Gew.-% und einem Gehalt an Diorganosiloxy-Einheiten zwischen 4 Gew.-% und 20 Gew.-% haben.

5. Mischungen gemäß Anspruch 1, enthaltend zusätzlich einen Zusatz ausgewählt aus Hilfsstoffen, Verstärkungsstoffen und Pigmenten.

6. Verfahren zur Herstellung der Mischungen der Ansprüche 1 bis 5, dadurch gekennzeichnet, daß man die Komponenten A) und B) und gegebenenfalls die Komponente C), geeignete Hilfsstoffe, Verstärkungsstoffe und/oder Pigmente in üblichen Mischaggregaten mischt und das Gemisch über die Schmelze in bekannter Weise homogenisiert und schließlich extrudiert.